# EUROPEAN PATENT APPLICATION

(11) **EP 1 883 196 A1**
(43) Date of publication of application: **30.01.2008**
(21) Application number: 06015820.1
(22) Date of filing: 28.07.2006
(51) Int. Cl.: H04L 29/06

(54) **Method for packet-based data transmission in a network having mobility functionality**

(71) Applicant: Siemens AG, 80333 München (DE)
(72) Inventor: Rute Esteves Carvalho, Sofia, Dr., 81673 München (DE); Hof, Axel, 73092 Heiningen (DE); Wevering, Stefan, 82284 Grafrath (DE)

(57) **Abstract**

The invention relates to a method for packet-based data transmission in a network having mobility functionality, the network having a plurality of nodes and network elements, a first node (MN) being associated with a first address (HoA) being a home address in a home subnet (HN), wherein the mobility functionality enables a seamless and continuous data transmission between the first node (MN) and a second node (CN), while and after the move of the first node (MN) from its associated home subnet (HN) to a visited subnet (VN), wherein a second address (CoA) in the visited subnet (VN) to which the first node (MN) has moved is assigned to the first node (MN); the second address (CoA) is mapped to the first address (HoA); a first network element (HA-C) providing control functionality for said first node (MN) is informed about the mapping between the first and the second address (HoA, CoA); a second network element (HA-D) being a network element different from the first network element (HA-C) and providing data transmission functionality for the first node (MN) is triggered by the first network element (HA-C) to establish a packet-based tunnel (T) between the first address (HoA) and the second address (CoA); the second network element (HA-D) establishes the packet-based tunnel (T) between the first address (HoA) and the second address (CoA); upon establishment of the packet-based tunnel (T), an acknowledgement is sent from the second network element (HA-D) to the first network element (HA-C) and from the first network element (HA-C) to the first node (MN); data is transmitted between the first node (MN) and the second node (CN) via the packet-based tunnel (T).

## Description

The invention relates to a method for packet-based data transmission in a network having mobility functionality and to a network having mobility functionality.

Packet-based networks having mobility functionality are well-known in the art. One example of such networks are Mobile IP networks, both in the form of Mobile IPv6 and of Mobile IPv4. Mobile IP provides the means to hide the change of IP addresses to the OSI layers (OSI = Open Systems Interconnection) above the network layer. To hide those changes of address, Mobile IP provides the association of an original IP address identity, namely the so called home address in a home network, with the current IP address identities in a visited network, namely the care of addresses CoA. To do so, a central registration element, the so called home agent, is used which holds the association between the old and the new IP address identities.

Common networks having mobility functionality have the problem that the home agent functionality is provided in a single element which is the first hop from the perspective of a mobile node in the network. Consequently, a node roaming from its home network to another network always has to use this single network element being located in the home network. Therefore, roaming in conventional networks is not very flexible as there is a fixed assignment of the home agent which means that the home agent must be placed at the same physical segment as the node.

It is an object of the invention to provide a method for packet-based data transmission in a network having mobility functionality wherein a data transmission with respect to a roaming node in a visited network is more flexible and easier than in prior art transmission methods.

This object is solved by the independent claims. Advantageous embodiments of the invention are defined in the dependent claims.

The method according to the invention is used in a network having a plurality of nodes and network elements. The terms nodes and network elements are equivalent and the two different terms are used hereinafter in order to clearly distinguish elements of different functions from each other. The network comprises a first node being associated with a first address being a home address in a home subnet, wherein the mobility functionality enables a seamless and continuous data transmission between the first node and a second node, during and after the move of the first node from its associated home subnet to a visited subnet. "Seamless" means that data transmission is performed independently of the change of the subnet, while "continuous" means that data transmission is not interrupted.

According to the method of the invention, a second address in the visited subnet to which the first node has moved is assigned to the first node in a step a). Thereafter, the second address is mapped to the first address in a step b). A first network element providing control functionality for said first node is informed about the mapping between the first and the second address in a step c). In a subsequent step d), a second network element being a network element different from the first network element and providing data transmission functionality for the first node is triggered by the first network element to establish a packet-based tunnel between the first and the second address. In a step e), the second network element establishes the packet-based tunnel between the first address and the second address. Upon establishment of the packet-based tunnel, an acknowledgement is sent from the second network element to the first network element and from the first network element to the first node (step f)). Finally, in step g), data are transmitted between the first node and the second node via said packet-based tunnel.

The method according to the invention decouples the control plane of a home agent and the data plane of a home agent by providing two different network elements interacting with each other such that mobility functionality is ensured. Due to the method of the invention, the first network element may be provided in the network at a location completely different from the second network element, thus enabling a separation between the control and the data transmission in a mobility scenario.

The aforementioned method is preferably used in data transmission based on the above mentioned Mobile IP protocol, particularly on Mobile IPv4 and/or Mobile IPv6, wherein in Mobile IPv6 the packet-based tunnel is a temporary tunnel being established until the second node gets notified directly by the first node about the mapping between the first and the second address.

In a preferred embodiment of the method according to the invention, a plurality of second network elements are assigned to the first network element and the first network element selects one of the second network elements. The aforementioned steps d) to f) are performed for the selected second network element of the plurality of second network elements. Eventually, data is transmitted between the first node and the second node in step g) by the packet-based tunnel established in step e) by the selected second network element. According to this embodiment, the most appropriate second network element from the plurality of second network elements may be chosen for data transmission. For example, the network element enabling the shortest transmission path can be chosen or a network element having a lot of available resources may be selected for data transmission. Hence, this embodiment provides a fast and flexible data transmission according to current conditions, e.g. the load, in the network.

In a preferred embodiment of the invention, the transmission method uses as a first network element a network element provided in another subnet as the home subnet, particularly in the net of a mobile service provider. This enables a separate treatment of the mobility functionality by a global provider which can be contacted from various subnets in the networks of various providers.

In another embodiment of the invention, the method uses as a second network element an access router in the home subnet, said access router being connected to the first node by a link in the home subnet when the first node is in the home subnet. Due to this embodiment, the mobility functionality with respect to the data transmission may remain in the same network element as in the prior art, particularly in Mobile IP.

In a further embodiment of the invention, the second address in step a) is assigned to the first node by a third network element, particularly an access router for relaying the communication between the first node and the first network element, in the visited subnet. Due to this feature, the method may be easily integrated in known networks having mobility functionality, particularly in Mobile IPv4 networks which use the so-called foreign agent as a third network element. Preferably, the acknowledgement sent in the above step f) is transmitted via the third network element.

Furthermore, the second address may be the address of the third network element in the visited subnet. Moreover, the packet-based tunnel established in step e) may terminate at the third network element which decapsulates data received from the packet-based tunnel and forwards them to the first node. The aforementioned embodiments using the third network element may be easily integrated in prior art networks, particularly in Mobile IPv4 networks using a third network element in the form of a foreign agent.

Besides the aforementioned method, the invention also relates to a network for packet-based data transmission, the network having mobility functionality and comprising a plurality of nodes and network elements, a first node being associated with a first address being a home address in a home subnet, wherein the mobility functionality enables a seamless and continuous data transmission between the first node and a second node, while and after the move of the first node from its associated home subnet to a visited subnet, the first node receiving a second address in the visited subnet when having moved to the visited subnet, wherein the network further comprises:
- a first network element providing control functionality for said first node;
- a second network element being a network element different from the first network element and providing data transmission functionality for the first node;
- the first and second network elements being adapted to perform the aforementioned method according to the invention.

This network has the same advantages as the aforementioned method. Particularly, the network may be based on Mobile IP, e. g. Mobile IPv4 and/or Mobile IPv6. Furthermore, the network may have a plurality of second network elements assigned to the first network element. Analogously to the method of the invention, the first network element may be a network element provided in another subnet as the home subnet, particularly in the net of a mobile service provider. Furthermore, the second network element may be an access router in the home subnet, said access router being connected to the first node by a link in the home subnet when the first node is in the home subnet. The network may also comprise a third network element in the visited network for assigning the second address to the first node, particularly an access router for relaying the communication between the first node and the first network element.

Additionally to the above network, the invention also relates to a network element to be used in such a network, wherein the network element is the first network element as defined above. Analogously, the invention also relates to a network element to be used in the above network, wherein the network element is the second network element as defined above.

Embodiments of the invention will be described hereinafter in detail with reference to the accompanying drawings, wherein:
- Fig. 1: is a schematic illustration showing the mobility functionality of a MIPv6 network according to the prior art;
- Fig. 2: is an illustration of a prior art network explaining the problem arising in such a network when a node is roaming.
- Fig. 3: is a schematic illustration showing the mobility functionality in a MIPv6 network according to one embodiment of the invention;
- Fig. 4: is a schematic illustration showing the mobility functionality of a MIPv4 network according to another embodiment of the invention;
- Fig. 5: is a schematic illustration showing an embodiment of a network according to the invention including a plurality of network elements having data transmission functionality.

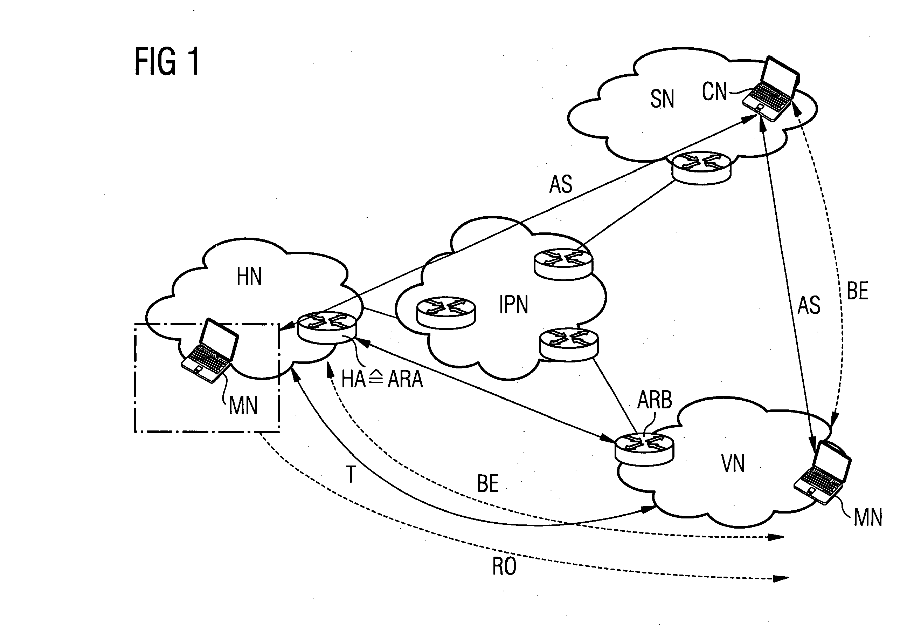

Fig. 1 shows a roaming scenario in a conventional MIPv6 network. Mobile IP uses a special terminology for designating the elements in such a network. Particularly, the node roaming from one subnet to another is designated as mobile node MN. The subnet to which the mobile node MN originally belongs is called the home network HN having a home agent HA which is implemented in an access router ARA. The mobile node has a so called home address HoA in the home network HN. The subnet to which the mobile node MN roams is the visited network VN having an access router ARB. The mobile node MN has one or more care of addresses in the visited network VN. In this example, a case is discussed where the mobile node MN has one care of address CoA. The node with which the mobile node has an active session AS is called the correspondent node CN. With respect to the terminology of the claims, the mobile node MN corresponds to the first node defined in claim 1, the correspondent node CN corresponds to the second node defined in claim 1, the home address is the first address in claim 1 and the care of address is the second address defined in claim 1.

The correspondent node CN is located in another subnet SN. The home network HN, the visited network VN and the other subnet SN are connected by an IP network IPN via respective network elements. When the mobile node MN roams to the visited network VN (indicated by arrow RO), the active session AS between MN and CN is already established. MIPv6 supports session continuity so that this active session is seamlessly diverted to the care of address CoA when the mobile node MN roams to subnet VN.

In the scenario of Fig. 1, the mobile node MN roaming to the visited network VN gets the care of address CoA by means of regular IPv6 address configuration means. The process of receiving the care of address is well-known in IPv6 and, thus, not described in detail in this application. Thereafter, a so called MIPv6 binding exchange is performed between the mobile node MN and the home agent HA as well as between the mobile node MN and the correspondent node CN, as designated by arrows BE in Fig. 1. Due to this binding exchange, the home agent HA is informed about the mapping between the home address HoA and the care of address CoA of the roaming node MN. As a consequence, an IPv6 in IPv6 tunnel T is established from the home address HoA to the care of address CoA so that traffic originally directed to the home address HoA is diverted to the care of address CoA while the correspondent node CN is not directly notified by the mobile node MN of the mapping between HoA and CoA. Thereafter, data are transported via the tunnel T between the mobile node MN in the visited network VN and the correspondent node CN in the subnet SN until the correspondent node CN is notified by the mobile node MN about the new mapping. From then on, the data transmission between the mobile node and the correspondent node is performed by the regular packet-based means (routing).

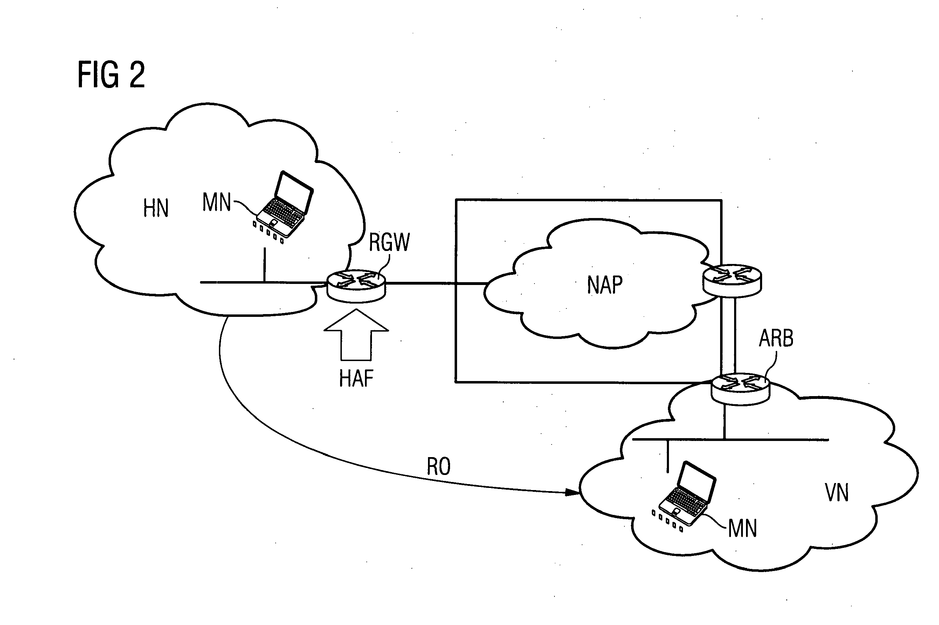

In the scenario of Fig. 1, the home agent HA corresponds to the access router ARA at the link of the mobile node MN, the link being established when the mobile MN is in the home network HN. This is always the case in MIP standards regardless whether Mobile IPv4 or Mobile IPv6 is used. However, this may lead to problems as illustrated in the following Fig. 2.

In Fig. 2, the home network HN is a residential network, e. g. a WLAN network in the house of a person, being connected by a residential DSL gateway RGW to a DSL network access provider NAP being connected to a visited network VN via the access router ARB of the visited network VN. In Fig. 2, the node MN roams to the visited network VN as indicated by the arrow RO. According to the MIP protocol, the home agent functionality HAF (indicated by a thick arrow in Fig. 2) is to be included in the router having a direct link to the mobile node MN in the home network HN. Hence, in the scenario of Fig. 2, the home agent is the residential gateway RGW providing a connection from the home network HN to the network access provider NAP via DSL. The implementation of the home agent functionality HAF in the residential gateway RGW is quite limitative, because the residential gateway is usually out the range of the network access provider's control and management and the control traffic required to perform MIP bindings would unnecessarily cross a backbone's provider all the way to the residential network possibly causing severe performance problems due to the limited upstream bandwidth in DSL deployments.

This scenario becomes even more complex if the networking distance between the visited network VN and the home network HN is quite large. Moreover, another problem arises from the fact that mobility service is today normally not provided by the network access provider NAP but by a separate provider supplying the mobility service (hereinafter called MSP, MSP = Mobility Service Provider). In this instance, the scenario shown in Fig. 2 would not be capable to provide mobility service, particularly seamless roaming from the node MN to another network without session disruption.

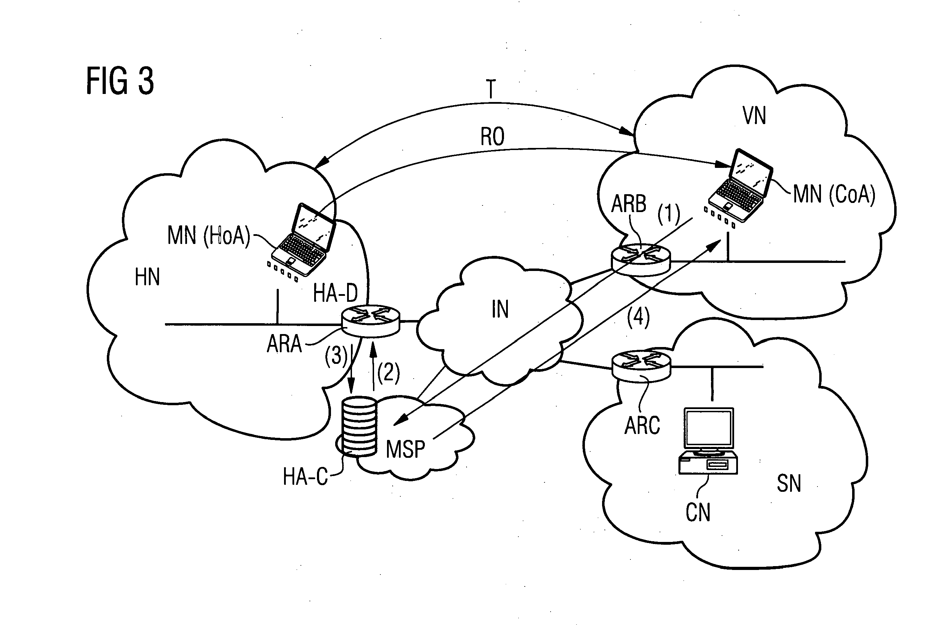

Bearing in mind the aforementioned problems, the embodiments of the invention shown in Fig. 3 to 5 solve these problems by splitting the home agent HA in two different and separate functional components, i. e. a network element having home agent control plane functionality which is denoted as HA-C, and a network element having home agent data plane functionality, which is denoted as HA-D. Such splitting allows increased flexibility concerning the placement of the home agent functionality.

Fig. 3 shows one embodiment of the invention in which Mobile IPv6 is used as a network protocol. In Fig. 3 the mobile node MN having the home address HoA in the home network HN roams to the visited network VN as indicated by the arrow RO. When roaming, there is an active session between the mobile node MN and a correspondent node CN in another subnet SN. The home network HN has an access router ARA, the visited network VN has an access router ARB and the subnet SN including the correspondent node CN has an access router ARC. Those routers are connected to the Internet IN. Furthermore, the network shown in Fig. 3 includes the above mentioned mobility server provider MSP as a separate subnet. This provider includes the aforementioned element HA-C. Contrary to the networks according to the prior art, there does not exist one single element having the functionality of a home agent. In spite of that, the home agent is splitted in one network element HA-C included in the mobile service provider MSP and a network element HA-D implemented in the access router ARA of the home network HN and which provides the data transmission functionality of the home agent. The different functionalities of the elements HA-C and HA-D will become apparent from the following description of the steps being performed during roaming.

After the mobile node MN has moved to the visited network VN, the mobile node MN gets by regular IPv6 address configuration means the care of address CoA that represents that node MN in the visited network VN. This care of address CoA is provided by the access router ARB. The mobile node MN then performs a binding exchange indicated by arrow (1) with the network element HA-C to let said element know about the mapping between the care of address CoA and the home of address HoA. The mobile node MN uses for this exchange a regular binding update message with destination option. This binding update message is well-known in Mobile IPv6 and, thus, not described in detail in this application.

Upon receipt of said binding update message, the HA-C notifies the HA-D in the access router ARA (arrow (2)) so that this element triggers the creation of a tunnel T (IPv6 in IPv6) from the home address HoA to the care of address CoA. Thereafter, the network element HA-D sends an acknowledgement ACK to the network element HA-C which is indicated by the arrow (3) in Fig. 3. The network HA-C itself replies to the mobile node MN with a binding acknowledgement message indicated by arrow (4) in Fig. 3. Consequently, packets sent from the correspondent node CN to the home address HoA are redirected (tunnelled) to the mobile node MN until the correspondent node CN receives a notification about the mapping between HoA and CoA from the mobile node MN.

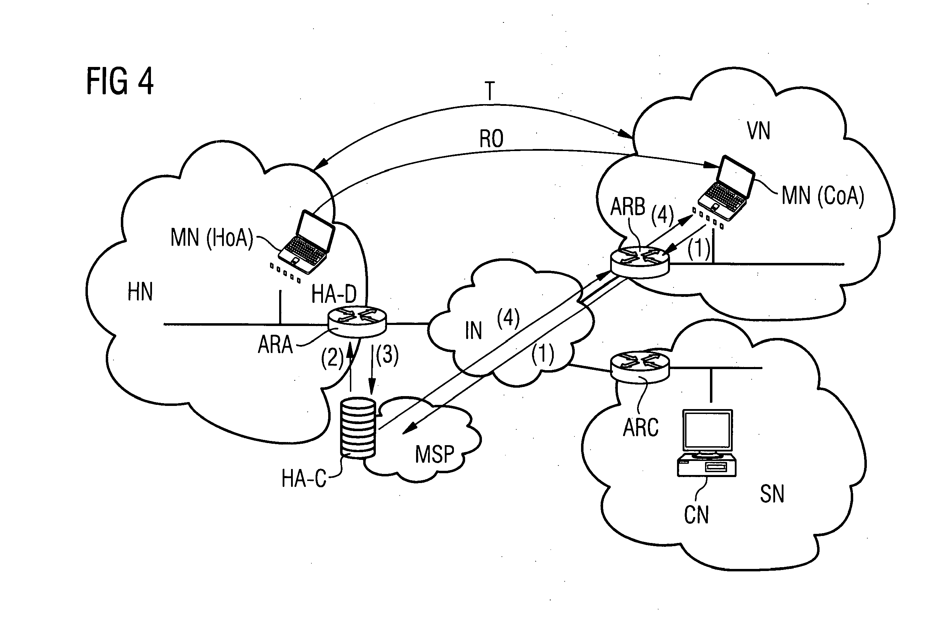

Fig. 4 shows substantially the same scenario as Fig. 3 and the reference numerals in Fig. 4 which are identical to the reference numerals in Fig. 3 designate the same network elements. Analogously to Fig. 3, a mobile node MN in the home network HN roams to the network VN during an active session with the correspondent node CN. The scenario in Fig. 4 differs from the scenario in Fig. 3 in that instead of Mobile IPv6 Mobile IPv4 is used which results in a further network element in the visited network VN, i. e. the so called foreign agent FA which is a well-known component used in Mobile IPv4. The IP address of this foreign agent FA is used in Mobile IPv4 as the care of address CoA. In the scenario of Fig. 4, the foreign agent FA is implemented in the access router ARB of the visited network VN. In the Mobile IPv4 roaming process the following steps are performed:

After the mobile node MN has moved to the visited network VN, said node gets by regular MIPv4 means (i.e. well-known agent advertisements) the care of address CoA that represents node MN in the visited network VN. This address is provided by the foreign agent FA. Thereafter, the mapping between the care of address CoA and the home address HoA is transmitted from the mobile node MN to the element HA-C in the network MSP via the foreign agent FA. This transmission is indicated by two arrows (1), one arrow extending from the mobile node MN to the foreign agent FA and the other arrow extending from the foreign agent FA to the network element HA-C in the network MSP of the mobile service provider. Thereafter, the network element HA-C notifies HA-D (arrow (2)) so that this element triggers the creation of an IP-in-IP-tunnel T from the home address HoA to the care of address CoA. Contrary to the scenario of Fig. 3, the tunnel does not terminate at the mobile node MN but at the foreign agent FA which decapsulates the datagrams and forwards them to the mobile node MN in the visited network VN. Upon establishment of the tunnel T, HA-D sends an acknowledgement ACK to HA-C (arrow (3) in Fig. 4) which itself replies to the mobile node MN via the foreign agent FA with a well-known binding acknowledgement message indicated by arrows (4) in Fig. 4. Packets sent from the correspondent node CN to the home address HoA are always redirected (tunnelled) to the mobile node in the visited network VN because Mobile IPv4 does not support the option of informing correspondent nodes CN about the change of the address, as it happens in Mobile IPv6.

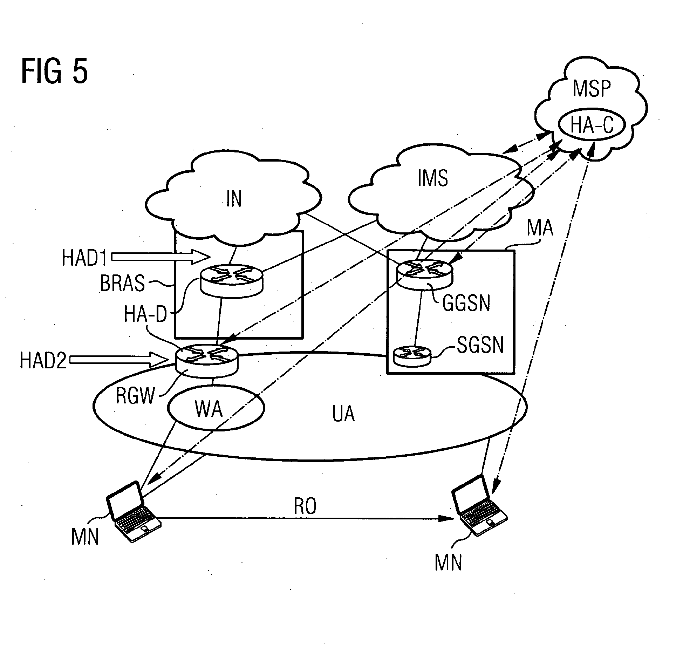

Fig. 5 shows a scenario according to the invention wherein the home agent HA-C having a control plane function controls a plurality of agents HA-D having the data plane functionality. In Fig. 5, the mobile node MN holds an access subscription agreement with two different providers, namely a DSL access provider having the broadband remote access server BRAS and a 3G provider. The 3G provider comprises the mobile access MA having components SGSN (SGSN = Serving GPRS Support Node) and GGSN (GGSN = Gateway GPRS Support Node) as well as the UMTS/GPRS access UA. The broadband remote access server BRAS has a connection to the Internet IN and the GGSN node of the 3G network has a connection to an IMS network IMS (IMS = IP Multimedia Subsystem). There is a trust relationship between these two providers established by known means, i.e. static AAA agreement (AAA = Authentication Authorization Accounting). This agreement allows the mobile node MN to roam freely between the networks of the two providers. The roaming is indicated in Fig. 5 by arrow RO. Before roaming, the node MN is connected to a WLAN access designated as WA in Fig. 5.

In Fig. 5, the mobility service is provided by a third party network, namely the mobile service provider MSP. The control plane functionality is incorporated in the network element HA-C incorporated in the net of the provider MSP. The mobile service provider has control over several elements in the network of Fig. 5. This control is indicated by dash-doted arrows in Fig. 5. The data plane functionality in Fig. 5 is incorporated in two network elements HA-D, namely a first network element HAD1 and a second network element HAD2. The first network element HAD1 is incorporated in the broadband remote access server BRAS and the second network element HAD2 is incorporated in a residential gateway RGW connecting the local network WA to the BRAS. In the scenario of Fig. 5, both network elements HAD1 and HAD2 are assigned to the single network element HA-C having the control plane functionality.

When the mobile node MN moves to the range of the 3G provider (as indicated by arrow RO), then MN gets a care of address CoA by regular means. The MN then takes care of registering the care of address CoA with the HA-C. Thereafter, the HA-C selects the most appropriate network element from the network elements HAD1 and HAD2 and triggers this element to establish a packet-based tunnel between the home address HoA and the care of address CoA. This is done in the same way as described with respect to the aforementioned embodiments. The advantage of the network shown in Fig. 5 results in the fact that the best HA-D to be used for the mobile node MN can be selected by the DSL access provider. In the above scenario, this always has to be an access router on the link of the mobile node.

The choice of the adequate server HA-C to use by the mobile node MN can be either done by steady configuration or, for the specific case of MIPv6, by automatic HA discovery process. Consequently, if the mobile node MN is participating in an active session to a correspondent node CN, the packets sent by the CN will always reach the mobile node MN in its new care of address CoA without the need for a new session registration. This ensures the fundamental property of session continuity of Mobile IP.

Summarized, the invention described hereinabove provides a decoupling of the data and control plane of the home agent used in Mobile IP, so that the control plane functionality can be placed anywhere else other than an access router of the home link of the mobile node, as it is currently the case. The element HA-C having the control plane functionality takes care of the following functions:
- Establishing an IPSec association (IPSec = IP Security) to the MN, so that Mobile IP binding messages related to the association between the home addresses HoA and the care of addresses CoA can be exchanged securely.
- Establishing IPSec association within different data plane elements HA-D which relate to the mobile node so that Mobile IP binding messages can be exchanged securely.
- Keep the mapping between home address HoA and care of addresses CoA.
- Decide which element HA-D from the ones that are supplied is used for data transmission.

Similarly, the data plane network element HA-D provides the following functions:
- Establishing an IPSec association to the HA-C so that Mobile IP binding messages can be exchanged securely;
- performing IP-in-IP tunnelling to the mobile node, as required by Mobile IP.

The invention as defined in the above embodiments has several advantages. As there is no restriction where to place the control plane functionality of the home agent, the interworking between Mobile IP in IMS systems (IMS = IP Multimedia Subsystem) is easier to achieve. Furthermore, the network according to the invention provides increased scalability. I.e., by separating the control plane from the data plane, it is possible to achieve a highly redundant control plane which can scale up to multiple thousands of subscribers by simply using a server farm, thus not directly impacting nor adding significant requirements to the routing data plane. Furthermore, the method provides a simpler processing of MIP-enabled routers. Particularly, as the control plane may be completely removed from regular routers, the forwarding performance in the network may be improved, particularly if the number of users is high.

## Claims

1. A method for packet-based data transmission in a network having mobility functionality, the network having a plurality of nodes and network elements, a first node (MN) being associated with a first address (HoA) being a home address in a home subnet (HN), wherein the mobility functionality enables a seamless and continuous data transmission between the first node (MN) and a second node (CN), during and after the move of the first node (MN) from its associated home subnet (HN) to a visited subnet (VN), wherein:
a) a second address (CoA) in the visited subnet (VN) to which the first node (MN) has moved is assigned to the first node (MN);
b) the second address (CoA) is mapped to the first address (HoA) ;
c) a first network element (HA-C) providing control functionality for said first node (MN) is informed about the mapping between the first and the second address (HoA, CoA) ;
d) a second network element (HA-D) being a network element different from the first network element (HA-C) and providing data transmission functionality for the first node (MN) is triggered by the first network element (HA-C) to establish a packet-based tunnel (T) between the first address (HoA) and the second address (CoA);
e) the second network element (HA-D) establishes the packet-based tunnel (T) between the first address (HoA) and the second address (CoA);
f) upon establishment of the packet-based tunnel (T), an acknowledgement is sent from the second network element (HA-D) to the first network element (HA-C) and from the first network element (HA-C) to the first node (MN);
g) data is transmitted between the first node (MN) and the second node (CN) via the packet-based tunnel (T).

2. The method according to claim 1, wherein the packet-based data transmission is based on Mobile IP, particularly on Mobile IPv4 and/or Mobile IPv6, wherein in Mobile IPv6 the packet-based tunnel (T) is a temporary tunnel being established until the second node (CN) gets notified by the first node (MN) about the mapping between the first and the second address (HoA, CoA).

3. The method according to claim 1 or 2, wherein
- a plurality of second network elements (HA-D) are assigned to the first network element (HA-C);
- the first network element (HA-C) selects one of the second network elements (HA-D);
- steps d) to f) of claim 1 are performed for the selected second network element (HA-D) of the plurality of second network elements;
- data is transmitted between the first node (MN) and the second node (CN) in step g) of claim 1 by the packet-based tunnel (T) established is step e) of claim 1 by the selected second network element (HA-D).

4. The method according to one of the preceding claims, wherein the method uses as a first network element (HA-C) a network element (HA-C) provided in another subnet as the home subnet, particularly in the net of a mobile service provider (MSP).

5. The method according to one of the preceding claims, wherein the method uses as a second network element (HA-D) an access router (ARA) in the home subnet (HN), said access router (ARA) being connected to the first node (MN) by a link in the home subnet (HA) when the first node (MN) is in the home subnet (HN).

6. The method according to one of the preceding claims, wherein in step a) of claim 1 the second address (CoA) is assigned to the first node (MN) by a third network element (FA), particularly an access router (ARB) for relaying the communication between the first node (MN) and the first network element (HA-C), in the visited subnet (VN).

7. The method according to claim 6, wherein the acknowledgement sent in step f) of claim 1 is transmitted via the third network element (FA).

8. The method according to claim 6 or 7, wherein the second address (CoA) is the address of the third network element in the visited subnet (VN).

9. The method according to claim 8, wherein the packet-based tunnel (T) established in step e) terminates at the third network element (FA) which decapsulates data received from the packet-based tunnel (T) and forwards them to the first node (MN).

10. A network for packet-based data transmission, the network having mobility functionality and comprising a plurality of nodes and network elements, a first node (MN) being associated with a first address (HoA) being a home address in a home subnet (HN), wherein the mobility functionality enables a seamless and continuous data transmission between the first node (MN) and a second node (CN), while and after the move of the first node (MN) from its associated home subnet (HN) to a visited subnet (VN), the first node (MN) receiving a second address (CoA) in the visited subnet (VN) when having moved to the visited subnet (VN), wherein the network further comprises:
- a first network element (HA-C) providing control functionality for said first node (MN);
- a second network element (HA-D) being a network element different from the first network element (HA-C) and providing data transmission functionality for the first node (MN);
- the first and second network elements (HA-C, HA-D) being adapted to perform a method according to one of the preceding claims.

11. The network according to claim 10, wherein the network is based on Mobile IP, particularly on Mobile IPv4 and/or Mobile IPv6.

12. The network according to claim 10 or 11, wherein a plurality of second network elements (HA-D) are assigned to the first network element (HA-C).

13. The network according to one of claims 10 to 12, wherein the first network element (HA-C) is a network element (HA-C) provided in another subnet as the home subnet, particularly in the net of a mobile service provider (MSP).

14. The network according to one of claims 10 to 13, wherein the second network element (HA-D) is an access router (ARA) in the home subnet (HN), said access router (ARA) being connected to the first node (MN) by a link in the home subnet (HA) when the first node (MN) is in the home subnet (HN).

15. The network according to one of claims 10 to 14, wherein the network comprises a third network element (FA) for assigning the second address (CoA) to the first node in the visited subnet (VN), particularly an access router (ARB) for relaying the communication between the first node (MN) and the first network element (HA-C).

16. A network element to be used in the network according to one of claims 10 to 15, the network element being the first network element as defined in claim 10.

17. A network element to be used in the network according to one of claims 10 to 15, the network element being the second network element as defined in claim 10.
